# EUROPEAN PATENT APPLICATION

(11) **EP 4 421 197 A1**
(43) Date of publication of application: **28.08.2024**
(21) Application number: 22943612.6
(22) Date of filing: 27.12.2022
(51) Int. Cl.: C22C 21/00, C22F 1/04, H01B 1/02

(54) **SUPER-HEAT-RESISTANT ALUMINUM ALLOY MONOFILAMENT**

(30) Priority: 27.05.2022 CN 202210584471
(71) Applicant: Jiangsu Zhongtian Technology Co., Ltd., Nantong, Jiangsu 226463 (CN); Shanghai Zhongtian Aluminum Wire Co., Ltd., Shanghai 201100 (CN)
(72) Inventor: BAI, Qingling, Nantong City, Jiangsu 226463 (CN); ZHOU, Feng, Nantong City, Jiangsu 226463 (CN); MIAO, Yaojun, Nantong City, Jiangsu 226463 (CN); SHAN, Xiaolong, Nantong City, Jiangsu 226463 (CN); WANG, Xinyu, Nantong City, Jiangsu 226463 (CN); XU, Haibo, Nantong City, Jiangsu 226463 (CN); MIAO, Xiaolin, Nantong City, Jiangsu 226463 (CN); XU, Chunjian, Nantong City, Jiangsu 226463 (CN)
(74) Representative: Rooney, John-Paul
(86) International application number: PCT/CN2022/142340
(87) International publication number: WO 2023/226427

(57) **Abstract**

The present application relates to the technical field of aluminum alloy materials, and provides a super-heat-resistant aluminum alloy monofilament. The strength of the monofilament is greater than 170 MPa, the conductivity is greater than 58% IACS, and a strength residual rate of the monofilament is greater than 90% when the monofilament is heated at 400°C for 1 hour. The monofilament is prepared by the following method: providing an aluminum alloy rod; performing first aging heat treatment on the aluminum alloy rod; drawing a rod material into a monofilament; and performing second aging heat treatment on the alloy monofilament, wherein elemental components of the aluminum alloy rod comprise, in percentage by mass, 0.15%-0.30% of Fe, smaller than or equal to 0.08% of Si, 0.1%-0.3% of Ni, 0.01%-0.2% of Nb, 0.2%-0.35% of Zr, 0.05%-0.2% of Re, and the remainder being Al and other inevitable impurity elements, and the total amount of the inevitable impurity elements is less than or equal to 0.03%.

## Description

### Cross Reference to Related Applications

The present application claims the priority from China Patent Application No. 202210584471.6 filed with China National Intellectual Property Administration on May 27, 2022 and titled as "Super-Heat-Resistant Aluminum Alloy Monofilament", the contents of which are incorporated herein in entirety by reference.

### Technical Field

The present application relates to the technical field of aluminum alloy materials, in particular to a super-heat-resistant aluminum alloy monofilament.

### Background Art

Overhead power transmission lines are key infrastructure for national economic and social development. With the continuous growth of electricity demand, it is necessary to carry out capacity expansion and transformation on the existing transmission lines, so as to greatly improve the current carrying capacities of the conductor transmission. The increase of current carrying capacity inevitably leads to a rise of the operating temperature of the conductors, which may cause the conductors to have problems such as decreased tensile strength and creepage. Therefore, it is necessary to improve the heat resistance of the alloy materials. At present, technologies for heat-resistant aluminum alloys having an operating temperature of 150°C and super-heat-resistant aluminum alloys having an operating temperature of 210°C are relatively matured, but there is still a blank in the field of super-heat-resistant aluminum alloy wires having an operating temperature of 230°C or above. Therefore, it is of great significance to develop super-heat-resistant aluminum alloy wires to improve the power transmission efficiency of overhead power transmission lines and achieve the goals of energy saving and emission reduction in power grids.

At present, there is no matured technology for mass-production of super-heat-resistant aluminum alloy wires in China, owing to a main technical challenge that the heat resistance of the alloys can't meet related standards. The Chinese Patent No. CN108220693B has disclosed a rare-earth aluminum alloy, which has a heat resistant property that meets the national standard for super-heat-resistant alloys, but the rare-earth aluminum alloy has a rare-earth element content higher than 10%, and has a high cost. Therefore, the rare-earth aluminum alloy is not suitable for mass production and wide application.

### Summary of the Invention

The present application provides a super-heat-resistant aluminum alloy monofilament, to at least solve the problems in the prior art, including a poor heat-resistant performance of aluminum alloy monofilaments and high cost caused by a high content of rare earth elements.

The present application provides a super-heat-resistant aluminum alloy monofilament, which has a strength residual rate higher than 90% after the monofilament is heated at 400°C for 1 hour;
the monofilament may be prepared with the following method:
providing an aluminum alloy rod;
performing a first aging and heat treatment on the aluminum alloy rod at 380 to 450°C for 20 to 70 hours to obtain an aluminum alloy after aging and heat treatment;
drawing the aluminum alloy after aging and heat treatment to obtain alloy monofilaments; and
performing a second aging and heat treatment on the alloy monofilaments at 350 to 400°C for 30 to 50 hours to obtain the monofilaments;
wherein, measured in mass fractions, element components of the aluminum alloy rod may include 0.15-0.30% Fe, Si equal to or smaller than 0.08%, 0.1-0.3% Ni, 0.01-0.2% Nb, 0.2-0.35% Zr, 0.05-0.2% Re, and Al and other inevitable impurity elements in the remaining fractions; and the total fractions of the inevitable impurity elements may be smaller than or equal to 0.03%.

Optionally, in some embodiments of the present application, a tungsten steel die may be used in the drawing treatment, and the drawing treatment may be performed at a drawing speed of 8 to 10 m/s.

Optionally, in some embodiments of the present application, the aluminum alloy rod may have a diameter of 9 to 10 mm.

Optionally, in some embodiments of the present application, the aluminum alloy rod may be prepared through the following steps:
S11. Smelting alloy: providing a raw material according to the element components of the aluminum alloy rod, melting the raw material, and removing slag to obtain a melt;
S12. Refining in a furnace: refining the melt in a holding furnace at 730 to 740°C, and standing still;
S13. In-line refining: performing in-line degassing and filtering on the aluminum melt after the casting is commenced; and
S14. Performing continuous casting and rolling: casting and rolling the in-line refined aluminum melt through a continuous casting and rolling process to obtain the aluminum alloy rod.

Optionally, in some embodiments of the present application, in the step S12, the in-line refining duration may be 10 to 15 minutes; and/or
the standing duration may be 30 to 40 minutes; and/or
the standing temperature may be 720 to 730°C.

Optionally, in some embodiments of the present application, the continuous casting and rolling process may include: continuously casting the refined melt at 700 to 720°C with a wheel crystallizer to obtain a casting blank; and rolling the casting blank at 490 to 510°C with a continuous rolling mill group to obtain the aluminum alloy rod.

Optionally, in some embodiments of the present application, the in-line refined melt may have a hydrogen content lower than or equal to 0.12 ml/100g.

Optionally, in some embodiments of the present application, the Re may be La and Ce;
and the mass ratio of La to Ce may be 1:1.

Optionally, in some embodiments of the present application, the monofilament may have tensile strength higher than or equal to 170 MPa and electrical conductivity higher than or equal to 58% IACS.

Optionally, in some embodiments of the present application, the content of each element in the inevitable impurity elements may be lower than or equal to 0.005%.

The existing methods for producing heat-resistant aluminum alloy wires usually employ a rod aging treatment process, and few methods employ a monofilament aging treatment process. When the rod aging treatment process is used, the heat-resistant phase can be fully precipitated, and the strength of monofilaments is higher after the drawing, but the heat resistance and creep resistance of the monofilaments are decreased; when the monofilament aging treatment process is used, the monofilaments have already undergone recrystallization before the heat-resistant phase is precipitated because of the high precipitation temperature and slow precipitation process of the heat-resistant phase, consequently the strength of the monofilaments is severely decreased, and can't meet the criteria.

The present application has at least the following beneficial effects: (1) the Fe and Ni elements added in the aluminum alloy monofilament provided by the present application can form a FeNiAl₉ phase during the casting, and the FeNiAl₉ phase is fractured and distributed at grain boundaries through the rolling and drawing, thereby the high-temperature strength of the alloy is improved; fine Al₃Zr, Al₃Nb and NbNis phases can precipitate in the aging process resulted from the added Nb and Zr elements, and these phases can pin dislocations and greatly increase the recrystallization temperature and improve the heat resistance of the alloy; (2) by employing a rod aging process and a monofilament aging process in combination, the fine Al₃Zr phase, Al₃Nb phase and a small amount of NbNis phase precipitated in the rod aging process can effectively pin dislocations and sub-grain boundaries in the monofilament drawing process, thereby increase the recrystallization temperature of the alloy and provide conditions for the subsequent monofilament aging; the aging and heat treatment on the drawn monofilaments can make Nb, Ni and Zr precipitate more fully and improve the electrical conductivity of the alloy on one hand; and on the other hand, the aging and heat treatment on the drawn monofilaments can make the monofilaments climb through atomic diffusion to reduce the strain energy storage under a condition that no recrystallization occurs, so that a better heat resistant performance can be obtained. The super-heat-resistant aluminum alloy monofilament prepared in the present application has strength higher than or equal to 170 MPa, electrical conductivity higher than or equal to 58% IACS, and a strength survival rate higher than 90% after the monofilament is heated at 400°C for 1 hour.

### Embodiments

The technical solution of the present application will be described clearly and fully below in embodiments. Obviously, the embodiments described herein are only some embodiments of the present application, but not all embodiments of the present application. All other embodiments obtained by those having ordinary skill in the art based on the embodiments provided herein without expending any creative labor shall be deemed as falling in the scope of protection of the present application.

The technical solution of the present application will be described clearly and fully below in embodiments. Obviously, the embodiments described herein are only some embodiments of the present application, but not all embodiments of the present application. All other embodiments obtained by those having ordinary skill in the art based on the embodiments provided herein without expending any creative labor shall be deemed as falling in the scope of protection of the present application.

In the description of the present application, it should be understood that "a plurality of" means two or more, unless otherwise specified explicitly.

The following disclosure provides many different embodiments or examples to implement different structures in the present application. In order to simplify the disclosure of the present application, components and arrangements of specific examples will be described below. Of course, the examples are only exemplary, and are not intended to limit the present application. In addition, reference numerals and/or reference letters may be used repeatedly in different examples in the present application, and such repetition is for the purpose of simplicity and clarity, and does not in itself indicate the relationship between the various embodiments and/or arrangements discussed herein. In addition, the present application provides examples of various specific materials, but those having ordinary skill in the art can readily appreciate that other processes and/or other materials may be used.

The present application provides a super-heat-resistant aluminum alloy monofilament, the monofilament has a strength residual rate higher than 90% after the monofilament is heated at 400°C for 1 hour;
the monofilament is prepared with the following method:
providing an aluminum alloy rod;
performing a first aging and heat treatment on the aluminum alloy rod at 380 to 450°C for 20 to 70 hours to obtain the aluminum alloy after aging and heat treatment;
drawing the aluminum alloy after aging and heat treatment to obtain alloy monofilaments; and
performing a second aging and heat treatment on the alloy monofilaments at 350 to 400°C for 30 to 50 hours to obtain the monofilaments;
wherein, measured in mass fractions, element components of the aluminum alloy rod include 0.15-0.30% Ferrum (Fe), Silicon (Si) equal to or smaller than 0.08%, 0.1-0.3% Nickel (Ni), 0.01-0.2% Niobium (Nb), 0.2-0.35% Zirconium (Zr), 0.05-0.2% Re, and Aluminum (Al) and other inevitable impurity elements in the remaining fractions; and the total fractions of the inevitable impurity elements are smaller than or equal to 0.03%.

It should be noted that the Re is Lanthanum (La) and Cerium (Ce), which are added in the form of an Al-RE (Aluminum and rare earth element) master alloy.

The mass ratio of La to Ce is 1:1.

In some embodiments, a tungsten steel die is used in the drawing treatment, and the drawing treatment is performed at a drawing speed of 8 to 10 m/s.

In some embodiments, the aluminum alloy rod has a diameter of 9 to 10 mm.

In some embodiments, the aluminum alloy rod is prepared through the following steps:
S11) Smelting alloy: providing a raw material according to the element components of the aluminum alloy rod, melting the raw material, and removing slag to obtain a melt;
S12) Refining in a furnace: refining the melt in a holding furnace at 730 to 740°C, and standing still;
S13) In-line refining: performing in-line degassing and filtering on the melt after the casting is commenced; and
S14) Performing continuous casting and rolling: casting and rolling the refined aluminum melt through a continuous casting and rolling process to obtain the aluminum alloy rod.

In some embodiments, in the step S12, the refining duration is 10 to 15 minutes; and/or the standing duration is 30 to 40 minutes; and/or the standing temperature is 720 to 730°C.

In some embodiments, the continuous casting and rolling process comprises: continuously casting the inline refined melt at 700 to 720°C with a wheel crystallizer to obtain a casting blank; and rolling the casting blank at 490 to 510°C with a continuous rolling mill group to obtain the aluminum alloy rod.

In some embodiments, the inline refined melt has a hydrogen content lower than or equal to 0.12 ml/100g.

In some embodiments, the monofilament has tensile strength higher than or equal to 170 MPa and electrical conductivity higher than or equal to 58% IACS.

It should be noted that the inevitable impurity elements should be understood as elements that can't be completely avoided or removed in the raw materials and the production processes, such as V, Cu, Cr, Mn, etc.

In some embodiments, the drawing speed of the drawing treatment is 8 to 10 m/s.

Furthermore, the cast rod has a diameter of 9 to 10 mm.

In some embodiments, the cast rod is obtained by casting and rolling the melt through a continuous casting and rolling process;
wherein the continuous casting and rolling process comprises:
continuously casting the melt at 700 to 720°C with a wheel crystallizer to obtain a casting blank; and
rolling the casting blank at 490 to 510°C with a continuous rolling mill group and cooling, to obtain the rod.

In some embodiments, the super-heat-resistant aluminum alloy monofilament provided in the present application is prepared with the following method:
S1. Preparing an aluminum alloy rod.
S11. Smelting the melt: adding aluminum ingots, iron agent, Al-Zr alloy, Al-Ni alloy, Al-Nb alloy and Al-RE alloy into a smelting furnace for heating and melting, and removing slag from the molten aluminum; then, taking samples and carrying out spectral analysis, and adjusting the mass percentages of the alloy elements.
S12. Refining in a furnace: transferring the aluminum melt prepared in the first step into a holding furnace for refining.

Specifically, the temperature of the aluminum melt is adjusted to 730 to 740°C in a holding furnace, and the aluminum melt in the holding furnace is treated for 10 to 15 minutes with a mobile rotary blowing device using high-purity nitrogen and a refining agent in particles as degassing media to decrease the hydrogen content in the aluminum melt. Then the temperature of the aluminum melt is finely adjusted to 720 to 730°C, and the aluminum melt is kept still for 30 to 40 minutes.

S13. In-line refining: performing in-line degassing and filtering on the aluminum melt after the casting is commenced.

The purity of the aluminum melt refined in the furnace should be further improved through in-line refining, the in-line refining includes in-line degassing and filtration for impurity removal. In the embodiment of the present application, the aluminum melt refined in the furnace is degassed with an in-line degassing device, the in-line degassing device employs a rotary blowing degassing box and utilizes high-purity nitrogen as a degassing media; the rotation speed of the nozzle of the degassing box is 400 to 500 r/min., and the hydrogen content in the treated melt is lower than or equal to 0.12 ml/100g. The in-line filtration employs a 30/50 PPI two-stage foam ceramic filter plate to filter the degassed aluminum melt, so as to further remove the impurities in the aluminum melt and improve the purity of the aluminum melt.

S14. Continuous casting and rolling: pouring the refined aluminum melt into a wheel crystallizer and casting to form a casting blank; introducing the casting blank into a continuous rolling mill group for rolling, to form the aluminum alloy rod.

Specifically, in this embodiment, a wheel crystallizer is used for continuous casting of the casting blank. During the operation of the wheel crystallizer, the aluminum melt can continuously form a casting blank, which is sent to a continuous rolling mill group through an introduction device; the rolling temperature is controlled at 490 to 510°C, and after the rolling, an aluminum alloy rod in a diameter of 9 to 10 mm is obtained. The aluminum alloy rod is cooled with an in-line water-cooling device, and the cooled aluminum alloy rod is wound up by means of an automatic winding device.

S2. Performing aging on the rod: performing aging on the alloy rod.

Specifically, the heating temperature in the aging treatment on the alloy rod is 380 to 450°C, and the holding duration is 20 to 70 hours. By optimizing the heating temperature and holding time of the aging treatment, the Nb, Ni and Zr elements in a solid-solution state in the alloy rod precipitate from the matrix to form fine dispersed Al₃Zr, Al₃Nb and NbNis phases, which effectively pin dislocations and sub-grain boundaries, and greatly increase the recrystallization temperature of the alloy.

S3. Drawing: drawing the aged alloy rod to form aluminum alloy monofilaments.

Specifically, the aged alloy rod is continuously drawn on a sliding wire drawing machine to form aluminum alloy monofilaments having a diameter of 2.0 to 4.5 mm. A tungsten steel die is used as the drawing die, and the drawing speed is 8 to 10 m/s.

S4. Performing aging on monofilaments: performing a second aging treatment on the drawn aluminum alloy monofilaments.

Specifically, the heating temperature in the aging treatment on the alloy monofilaments is 350 to 400°C, and the holding duration is 30 to 50 hours. The aging treatment on the monofilaments can make Nb, Ni and Zr precipitate more fully and improve the electrical conductivity of the alloy on one hand; and on the other hand, the aging treatment on the monofilaments can make the monofilaments climb through atomic diffusion to reduce the strain energy storage under a condition that no recrystallization occurs, so that a better heat resistant performance can be obtained.

In some embodiments, the cross-sectional area of the casting blank is 2,400 mm²; in the continuous casting process, the process parameters of the continuous casting process are as follows: the casting speed is 8 to 12 m/min., the cooling water temperature is 15 to 40°C, and the cooling water pressure is 0.35 to 0.5 MPa.

In order to make the above implementation details and operations of the present application understood clearly by those skill in the art and fully reveal the improved performance of the ultra-heat-resistant aluminum alloy monofilament and its preparation method provided in the embodiments of the present application, the above technical solution will be explained in several examples below.

### Examples

(1) Aluminum ingots, an iron agent, an Al-Zr alloy, an Al-Ni alloy, an Al-Nb alloy and an Al-RE master alloy were added into a smelting furnace, the materials were heated and melted, and then stirred to remove slag, thereby the components shown in Examples 1-3 in Table 1 were obtained.
(2) The molten aluminum was transferred to a tilting holding furnace, and the melt temperature was adjusted for refining and standing in the furnace.
(3) In-line degassing and filtering treatment were performed on the melt after the casting was commenced; for the in-line degassing, a graphite rotor degassing box is used, and for the in-line filtering, 30/50 PPI two-stage foam ceramic filtering device is used.
(4) Continuous casting was performed with a wheel crystallizer.
(5) The casting blank was sent to a continuous rolling mill group by means of an introduction device, and rolling was carried out to obtain an aluminum alloy rod having a diameter of 9.5 mm, and then the aluminum alloy rod was automatically collected after in-line cooling.
(6) A first aging treatment was performed on the alloy rod. The aging process is shown in Examples 1-3 in Table 2.
(7) The aged alloy rod was drawn on a sliding wire drawing machine to obtain alloy monofilaments in diameter of 3.5 mm.
(8) A second aging treatment was performed on the drawn monofilaments. The aging process is shown in Examples 1-3 in Table 2.

The electrical conductivity, strength and strength residual rate of the monofilaments prepared from the above components through the above processes are shown in Examples 1-3 in Table 3.

### Comparative examples

The comparative examples are mainly different in the alloy composition, the aging treatment process of the rod and monofilaments, and the diameter of the monofilaments, as shown in Comparative Examples 1-3 in Table 1 and Table 2 respectively. The electrical conductivity, strength and strength residual rate of monofilaments obtained in the comparative examples are shown in Comparative Examples 1-3 in Table 3.

**Table 1**

| Sample No. | Fe | Si | Ni | Nb | Zr | Re |
|---|---|---|---|---|---|---|
| Example 1 | 0.2 | 0.05 | 0.25 | 0.15 | 0.32 | 0.11 |
| Example 2 | 0.18 | 0.04 | 0.22 | 0.13 | 0.28 | 0.12 |
| Example 3 | 0.25 | 0.05 | 0.27 | 0.1 | 0.3 | 0.08 |
| Comparative Example 1 | 0.16 | 0.05 | - | - | 0.31 | 0.04 |
| Comparative Example 2 | 0.15 | 0.04 | - | - | 0.35 | 0.05 |
| Comparative Example 3 | 0.17 | 0.06 | 0.25 | 0.12 | 0.32 | 0.1 |

**Table 2**

| Sample No. | Monofilament diameter | First aging and heat treatment | | Second aging and heat treatment | |
|---|---|---|---|---|---|
| | (mm) | Temperature (°C) | Duration (hours) | Temperature (°C) | Duration (minutes) |
| Example 1 | 3.5 | 420 | 70 | 360 | 40 |
| Example 2 | 3.5 | 430 | 50 | 360 | 50 |
| Example 3 | 3.5 | 400 | 50 | 370 | 40 |
| Comparative | 3.5 | 430 | 50 | 370 | 50 |
| Example 1 | | | | | |
| Comparative Example 2 | 3.5 | - | - | 370 | 50 |
| Comparative Example 3 | 4.0 | 420 | 70 | - | - |

**Table 3**

| Sample No. | Material Properties | | |
|---|---|---|---|
| | Electrical conductivity (% IACS) | Strength (MPa) | Strength residual rate after heating at 400°C for 1 hour (%) |
| Example 1 | 58.4 | 195 | 96 |
| Example 2 | 58.8 | 187 | 94 |
| Example 3 | 58.1 | 198 | 97 |
| Comparative Example 1 | 60.5 | 156 | 95 |
| Comparative Example 2 | 59.7 | 164 | 92 |
| Comparative Example 3 | 56.5 | 215 | 84 |

Finally, it should be noted that the above embodiments are intended only to explain the technical solution of the present application, but don't constitute any limitation on the present application; while the present application is described in detail above in some embodiments, those having ordinary skills in the art can readily understand that various modifications can be made to the technical solutions described in the above embodiments or equivalent replacements may be made to some or all the technical features therein; however, such modifications or replacements do not make the essence of the corresponding technical solutions deviate from the scope of the technical solutions in the embodiments of the present application.

### Industrial Applicability

The present application provides a super-heat-resistant aluminum alloy monofilament; the monofilament has a strength higher than 170 MPa, an electrical conductivity higher than 58% IACS, and a strength residual rate greater than 90% after the monofilament is heated at 400°C for 1 hour; the monofilament is prepared with the following method: providing an aluminum alloy rod; performing a first aging and heat treatment on the aluminum alloy rod; drawing the aluminum alloy rod into monofilaments; performing a second aging and heat treatment on the alloy monofilaments; wherein, measured in mass fractions, element components of the aluminum alloy rod include 0.15-0.30% Fe, Si equal to or smaller than 0.08%, 0.1-0.3% Ni, 0.01-0.2% Nb, 0.2-0.35% Zr, 0.05-0.2% Re, and Al and other inevitable impurity elements in the remaining fractions; and the total fractions of the inevitable impurity elements are smaller than or equal to 0.03%.

In addition, it can be understood that the super-heat-resistant aluminum alloy monofilament in the present application is reproducible and may be used in a variety of industrial applications. For example, the super-heat-resistant aluminum alloy monofilament in the present application may be used in the technical field of aluminum alloy materials.

## Claims

1. A super-heat-resistant aluminum alloy monofilament, **characterized in that** the strength residual rate of the monofilament is higher than 90% after the monofilament is heated at 400°C for 1 hour;
the monofilament is prepared with the following method:
providing an aluminum alloy rod;
performing a first aging and heat treatment on the aluminum alloy rod at 380 to 450°C for 20 to 70 hours to obtain the aluminum alloy after aging and heat treatment;
drawing the aluminum alloy after aging and heat treatment to obtain alloy monofilaments; and
performing a second aging and heat treatment on the alloy monofilaments at 350 to 400°C for 30 to 50 hours to obtain the monofilaments;
wherein, measured in mass fractions, element components of the aluminum alloy rod include 0.15-0.30% Fe, Si equal to or smaller than 0.08%, 0.1-0.3% Ni, 0.01-0.2% Nb, 0.2-0.35% Zr, 0.05-0.2% Re, and Al and other inevitable impurity elements in the remaining fractions; and the total fractions of the inevitable impurity elements are smaller than or equal to 0.03%.

2. The super-heat-resistant aluminum alloy monofilament of claim 1, wherein a tungsten steel die is used in the drawing treatment, and the drawing treatment is performed at a drawing speed of 8 to 10 m/s.

3. The super-heat-resistant aluminum alloy monofilament of claim 1 or 2, wherein the aluminum alloy rod has a diameter of 9 to 10 mm.

4. The super-heat-resistant aluminum alloy monofilament of any of claims 1 to 3, wherein the aluminum alloy rod is prepared through the following steps:
S11. Smelting alloy: providing a raw material according to the element components of the aluminum alloy rod, melting the raw material, and removing slag to obtain a melt;
S12. Refining in a furnace: refining the melt in a holding furnace at 730 to 740°C, and standing still;
S13. In-line refining: performing in-line degassing and filtering on the melt after the casting is commenced; and
S14. Performing continuous casting and rolling: casting and rolling the in-line refined aluminum melt through a continuous casting and rolling process to obtain the aluminum alloy rod.

5. The super-heat-resistant aluminum alloy monofilament of claim 4, wherein, in the step S12, the refining duration is 10 to 15 minutes; and/or
the standing duration is 30 to 40 minutes; and/or
the standing temperature is 720 to 730°C.

6. The super-heat-resistant aluminum alloy monofilament of claim 4 or 5, wherein the continuous casting and rolling process comprises: continuously casting the in-line refined melt at 700 to 720°C with a wheel crystallizer to obtain a casting blank; and rolling the casting blank at 490 to 510°C with a continuous rolling mill group to obtain the aluminum alloy rod.

7. The super-heat-resistant aluminum alloy monofilament of any of claims 4 to 6, wherein the in-line refined melt has a hydrogen content lower than or equal to 0.12 ml/100g.

8. The super-heat-resistant aluminum alloy monofilament of any of claims 1 to 7, wherein the Re is La and Ce;
and the mass ratio of La to Ce is 1:1.

9. The super-heat-resistant aluminum alloy monofilament of any of claims 1 to 8, wherein the monofilament has a tensile strength higher than or equal to 170 MPa and an electrical conductivity higher than or equal to 58% IACS.

10. The super-heat-resistant aluminum alloy monofilament of any of claims 1 to 9, wherein the content of each element in the inevitable impurity elements is lower than or equal to 0.005%.
